# EUROPÄISCHE PATENTSCHRIFT

(11) **EP 0 390 727 B1**
(45) Veröffentlichungstag und Bekanntmachung des Hinweises auf die Patenterteilung: **18.10.1995**
(21) Anmeldenummer: 90810065.4
(22) Anmeldetag: 29.01.1990
(51) Int. Cl.: G01N 31/16, G01N 27/44

(54) **Diaphragmalose Messzelle für die coulometrische Karl Fischer-Titration**
Diaphragmless measuring cell for the coulombmetric Karl Fischer-titration
Cellule de mesure sans diaphragme pour la titration coulombmétrique Karl Fischer

(30) Priorität: 16.02.1989 CH 536/89
(43) Veröffentlichungstag der Anmeldung: 03.10.1990
(73) Patentinhaber: METROHM AG, 9100 Herisau (CH)
(72) Erfinder: Richter, Wolfgang, Dr., CH-9100 Herisau (CH); Hürlimann, Walter, CH-9100 Herisau (CH)
(74) Vertreter: Hepp, Dieter

(56) Entgegenhaltungen:
- DE-B- 1 598 312
- GB-A- 1 426 206
- US-A- 3 726 778

## Beschreibung

Coulometrische Verfahren mit KF-Zellen eignen sich besonders für die Bestimmung geringer Wassergehalte in Lösungen. Bei diesem Verfahren wird Jod als Reagens elektrochemisch an der Anode einer Elektroden-Anordnung erzeugt. Aus der japanischen Offenlegungsschrift JP-A-56 123 605 und der Veröffentlichung Nichugowskii und Yakovlev ist eine KF-Messzelle bekannt, bei der zwischen Anode und Kathode kein Diaphragma angeordnet ist. (Bei anderen KF-Messzellen ist zwischen Anode und Kathode ein Diaphragma vorgesehen, mit welchem verhindert werden soll, dass die an der Anode und an der Kathode erzeugten Produkte unmittelbar wieder miteinander reagieren.)

Bei der Messzelle gemäss der genannten japanischen Offenlegungsschrift JP-A-56 123 605 wird durch die Wahl entsprechender Reagenzien, vor allem durch die Zugabe von Alkali oder Ammonium-Ionen sowie durch die Erhöhung der Stromdichte an der Kathode erreicht, dass auf ein Diaphragma verzichtet werden kann. Dies steigert die Betriebssicherheit der Messzelle und macht Wartungs- und Reinigungsarbeiten wegen einer Verstopfung des Diaphragmas oder wegen Anlagerungen am Diaphragma überflüssig.

Bei der bekannten Messzelle werden Reagenzien verwendet, bei denen an der Kathode hauptsächlich H₂ entsteht. H₂ reagiert sehr träge mit dem erzeugten J₂ so dass auf diese Weise unerwünschte Rückwirkungen vermieden werden können. Wichtig ist für die Zusammensetzung der Reagenzien bei diesen bekannten KF-Zellen jedenfalls, dass an der Kathode keine anderen reduzierenden Substanzen als H₂ entstehen. Dies wird auch im Artikel von G.F. Nichugowskii und P.P. Yakovlev in Zhurnal Analiticheskoi Khimii, Vol. 33, No. 4, pp. 684-687, April 1978 beschrieben.

In der Praxis hat sich gezeigt, dass Aenderungen im Stromfluss der Generator-Elektrode, bedingt durch die Regelung des Titrationsprozesses, Aenderungen des Indikatorsignals zur Folge haben können. Das Indikatorsignal, mit welchem der Prozess gesteuert wird, sollte aber nach Möglichkeit nur von der Konzentration der Reaktionspartner in der Lösung abhängen. Ausserdem hat sich gezeigt, dass das in der Reaktionszone zwischen der Kathode und der geschlossenen, zylindrischen Anode gemäss der japanischen Offenlegungsschrift entstehende Reagens nur ungenügend in der Lösung verteilt werden kann.

Aufgabe der Erfindung ist es, die Nachteile des Bekannten zu vermeiden, insbesondere also eine diaphragmalose Messzelle für die coulometrische Karl Fischer Titration zu schaffen, welche bei einfachem und störungssicherem Aufbau hohen Wirkungsgrad der Reagenzerzeugung und grosse Messgenauigkeit gewährleistet. Erfindungsgemäss wird dies in erster Linie durch eine Messzelle gemäss kennzeichnendem Teil Patentansprüche erreicht.

Bei einer solchen Messzelle mit grossflächiger Anode und einer Kathode mit kleiner Oberfläche ergeben sich die für eine Reaktion ohne Diaphragma gewünschten hohen Stromdichten an der Kathode wobei auf optimal einfache Weise die Beeinflussung der Indikator-Elektrode durch das elektromagnetische Feld zwischen Anode und Kathode der Generator-Elektrode dadurch minimiert wird, dass die grossflächige Anode mit ihrer Schmalseite der Indikator-Elektrode zugewandt ist. Wenn die Anode etwa horizontal, d.h. etwa parallel zur Lösungs-Oberfläche in der Messzelle angeordnet ist, lässt sich erreichen, dass das Feld zwischen Anode und Kathode etwa vertikal in der Messzelle verläuft, während die Elektroden der Indikator-Elektrode horizontal nebeneinander angeordnet werden können, so dass deren Potential-Feld horizontal verläuft.

Besonders zweckmässig ist es, wenn die Anode, bezogen auf die Oberfläche der Lösung, unter der Kathode angeordnet ist. Auf diese Weise wird sichergestellt, dass das an der Kathode entstehende Wasserstoff-Gas in der Lösung sofort aufsteigen kann.

Besonders einfach lässt sich die Anode herstellen, wenn sie ein scheibenförmiger Körper ist.

Hohe Stromdichten bei einfachem mechanischem Aufbau ergeben sich, wenn die Kathode stabförmig ist. Besonders vorteilhaft ist es dabei, wenn auch die Kathode mit ihrer schmalsten Seite - in diesem Fall mit der Stab-Längsachse - zur Indikator-Elektrode ausgerichtet ist.

In der Praxis wird man die Kathode zweckmassigerweise aus einem Metalldraht herstellen und die Anode aus einem Metall-Gitter formen. Wenn ein rohrförmiger Träger, z.B. ein Glasrohr für Kathode und/oder Anode vorgesehen ist, kann die Kathode auf einfache Weise quer zur Rohr-Längsachse in diesem befestigt werden, während die Anode z.B. am unteren Rohr-Ende ebenfalls quer angeordnet sein kann. Diese Anordnung gewährleistet eine ganze Reihe von Vorteilen: Sowohl Anode als auch Kathode sind mechanisch stabil und einfach am Trägerrohr zu befestigen. Durch das Trägerrohr kann der an der Kathode entstehende Wasserstoff optimal einfach nach oben abgeführt werden, ohne dass er das Reagens beeinflusst. Dabei entsteht eine hohe Dichte von Wasserstoffbläschen im Trägerrohr, so dass dort Durchmischung durch Turbulenz erfolgt. Um das an der Anode entstehende Reagens besser in der Lösung abführen und verteilen zu können empfiehlt es sich, in der Seitenwand des Trägerrohrs wenigstens zwei Oeffnungen anzuordnen.

Das an der Kathode entstehende Wasserstoff-Gas lässt sich besonders vorteilhaft durch das Trägerrohr abführen, wenn im Trägerrohr oberhalb der Oberfläche der Lösung eine Oeffnung vorgesehen ist. Um das Wasserstoff-Gas aus der Messzelle selbst abzuführen, kann es auch vorteilhaft sein, wenn das Trägerrohr direkt aus der Messzelle herausführt. Dabei ist dann zweckmässigerweise eine Feuchtigkeitssperre vorgesehen, um das Eindringen atmosphärischer Feuchtigkeit zu verhindern.

Besonders gute Verteilung des Reagens ergibt sich, wenn in der Messzelle ein Rührwerk zur Erzeugnung einer Strömung in der Lösung vorgesehen ist und wenn die Anoden-Kathoden-Anordnung in der Nähe der grössten Strömungsgeschwindigkeit, d.h. bei zylindrischen Messzellen etwa am Messzellen-Rand angeordnet ist.

Ungewünschte Beeinflussung der Indikator-Elektrode lässt sich praktisch völlig vermeiden, wenn das Messfeld zwischen den Einzel-Elektroden der Indikator-Elektrode etwa senkrecht zu den Feldlinien zwischen der Anode und der Kathode der Generator-Elektrode verläuft.

Insgesamt schafft die Erfindung eine hochempfindliche, störungssichere und konstruktiv einfache diaphragmalose Messzelle für coulometrischen Titrierverfahren.

Die Erfindung ist im folgenden in Ausführungsbeispielen anhand der Zeichnungen näher erläutert. Es zeigen:
- Figur 1: die schematische Darstellung eines Querschnitts durch eine Messzelle mit den Merkmalen der Erfindung;
- Figur 2, 2a, 2b: verschiedene Schnitte durch ein Trägerrohr für die Messzelle gemäss Figur 1,
- Figur 3a, 3b: eine abgewandelte Ausführungsform einer Kathoden-Anoden-Anordnung und
- Figur 4a, 4b: ein weiter abgewandeltes Ausführungsbeispiel einer Anode und einer Kathode.

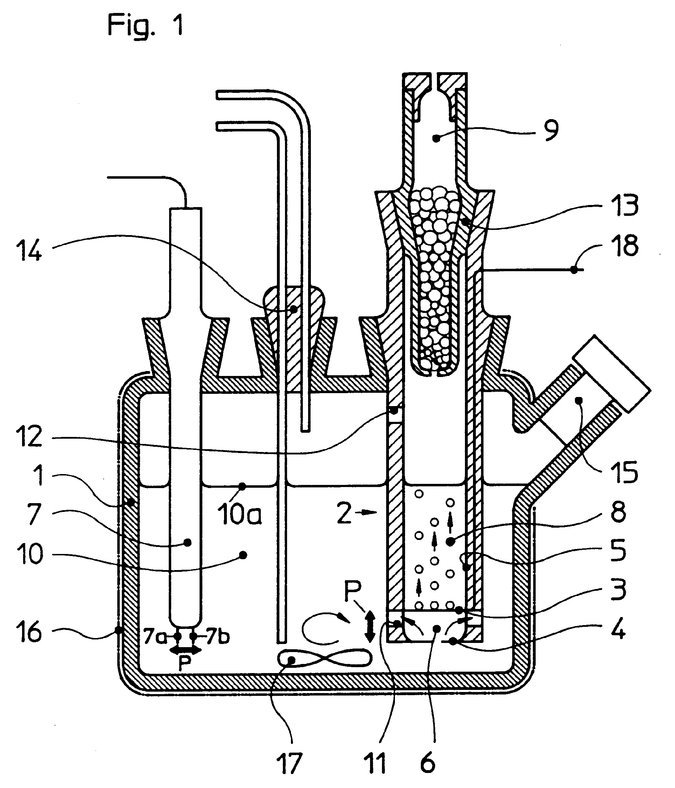

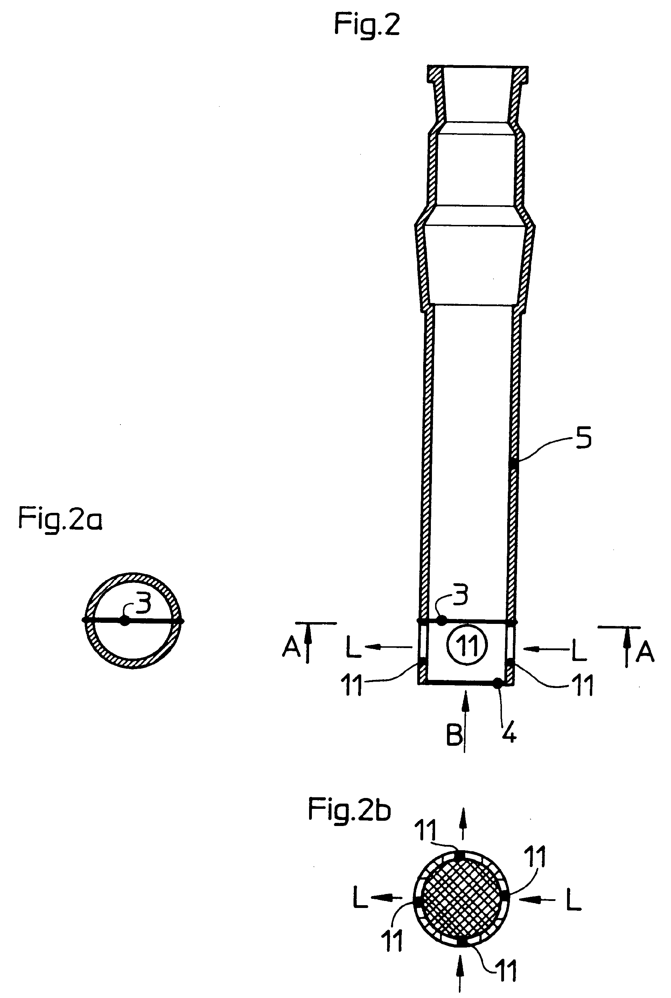

Gemäss Figur 1 ist eine zylindrische Messzelle 1 mit einer Indikator-Elektrode 7 versehen, welche zwei Einzel-Elektroden 7a, 7b aufweist. Die Indikator-Elektrode 7 ist mit einer nicht dargestellten Auswertungseinheit verbunden, um mittels der Einzel-Elektroden 7a, 7b in bekannter Weise ein Messignal zu erzeugen, mit dem der Ablauf der KF-Titration gesteuert wird. In der Messzelle 1 befindet sich eine Lösung 10 unterhalb deren Oberfläche 10a sich die scheibenförmige Anode 4 und die drahtförmige Kathode 3 einer Generator-Elektrode 2 befindet, die in nicht näher dargestellter Weise über eine Leitung 18 an eine Stromquelle angeschlossen sind, so dass zwischen Kathode 3 und Anode 4 ein elektrisches Potential liegt. Durch den Stromfluss zwischen Kathode 3 und Anode 4 wird an der Anode 4 Jod erzeugt, während an der Kathode 3 Wasserstoff entsteht und in Blasen 8 aufsteigt. Anode 3 und Kathode 4 sind an einem Glas-Rohr 5 befestigt, wie dies aus Figur 2 näher ersichtlich ist. Die am Glas-Rohr 5 befestigte Anordnung aus Kathode 3 und Anode 4 dient also als Generator-Elektrode 2 zur Erzeugung des Reagens in der Lösung 10. Damit das erzeugte Reagens aus der Reaktionszone 6 besser austreten und sich in der Lösung 10 verteilen kann, sind in der Seitenwand des Glas-Rohrs 5 vier Oeffnungen 11 vorgesehen, wie dies besonders gut aus Figur 2 ersichtlich ist.

Ein Rührwerk 17 (ein bekannter, nicht näher dargestellter Magnetrührer) sorgt für eine Stromung der Lösung 10 in der Messzelle 2, welche durch die Oeffnungen 11 hindurchströmt (Pfeil L in Figur 2). Dabei wird das in der Reaktionszone 6 erzeugte Reagens herausbefördert und so in der Lösung 10 verteilt, dass die zwischen den Einzelelektroden 7a, 7b befindliche Lösung mit dem erzeugten Reagens durchmischt ist.

Damit die aufsteigenden Wasserstoff-Blasen 8 im Glas-Rohr 5 keinen höheren Druck erzeugen, als im Raum über der Lösungsfläche 10a ist im Glas-Rohr 5 eine innere Oeffnung 12 angebracht, durch welche ein Druckausgleich stattfinden kann. Ausserdem ist das Glas-Rohr 5 durch die obere Wand der Messzelle 1 hindurchgeführt, so dass das erzeugte Wasserstoff-Gas abgeführt werden kann. Damit der Innenraum der Messzelle 1 nicht mit Wasser aus der umgebenden Atmosphäre kontaminiert wird, ist eine bekannte Feuchtigkeitssperre 13 vorgesehen. Ausserdem weist die Messzelle 1 einen Einfüllstutzen 15 sowie ein Probeneinleitungsrohr 14 auf. Die Messzelle ist ausserdem auf ihrer Aussenseite mit einem Lichtschutz 16 in bekannter Weise bedampft, um Störeinflüsse durch photochemisch induzierte Reaktionen auf die Karl Fischer Reaktion zu vermindern. Durch den Einfüllstutzen 15 können flüssige und feste Proben in die Messzelle 1 eingeführt werden, während das Probeneinleitungsrohr 14 zum Einleiten von gasförmigen Proben und wahlweise zum Entleeren verbrauchter und zum Füllen mit frischer Elektrolytlösung dient.

Wie aus Figur 1 ersichtlich ist, verläuft das Potential-Feld (Pfeil P) zwischen Kathode 3 und Anode 4 der Generator-Elektrode 2 vertikal, während das abgegriffene Potential-Feld zwischen den Indikator-Einzelelektroden 7a und 7b horizontal verläuft. Ausserdem ist die Anode 4 mit ihrer Schmalseite zur Indikator-Elektrode 7 hin gerichtet und die Kathode 3 weist mit ihrer Längsachse - also ebenfalls mit ihrer Schmalseite in der Projektion - zur Indikator-Elektrode 7 hin. Auf diese Weise werden die Störungseinflüsse zwischen Generator-Elektrode 2 und Indikator-Elektrode 7 auf ein absolutes Mindestmass reduziert. Gleichzeitig garantiert die horizontale Anordnung der Anode 4 unter der Kathode 3 eine Reagens-Erzeugung in der Reaktionszone 6, die schnelle Abführung des Reagens durch die Oeffnungen 11 einerseits und geringstmögliche Rückwirkung der Kathode 3 auf die Reaktionszone 6 andererseits gewährleistet. Die durch das Rührwerk 17 erzeugte Stromung in der Lösung 10 bewirkt eine Durchmischung im geschlossenen Glas-Rohr 5, welche zusätzlich durch Turbulenzen der aufsteigenden Wasserstoff-Blasen 8 verstärkt wird, so dass auf diese Weise eine sehr gute Durchmischung der Reaktionszone gewährleistet wird.

Aus Figur 2 ist ersichtlich, wie die Kathode 3 als gespannter Draht im Glas-Rohr 5 angeordnet ist. Figur 2a zeigt dabei einen Schnitt durch das Glas-Rohr 5 längs der Linie A-A in Fig. 2. Ausserdem ist ersichtlich, wie die Anode 4 als Drahtgitter an der Unterseite des Glas-Rohrs 5 befestigt ist. Figur 2b zeigt dabei eine Ansicht in Richtung B gemäss Figur 2. Durch die Oeffnungen 11 kann Lösung L in der vorstehend beschriebenen Weise strömen. Die Kathode 3 ist durch nicht näher dargestellte Oeffnungen im Glas-Rohr 5 durchgesteckt und kann damit jederzeit ausgewechselt werden. Die Anode 4 besteht aus einem Metallgitter, das in die untere Oeffnung des Glas-Rohrs 5 eingesteckt ist und deshalb ebenfalls z.B. zu Reinigungszwecken einfach entfernt oder ausgetauscht werden kann.

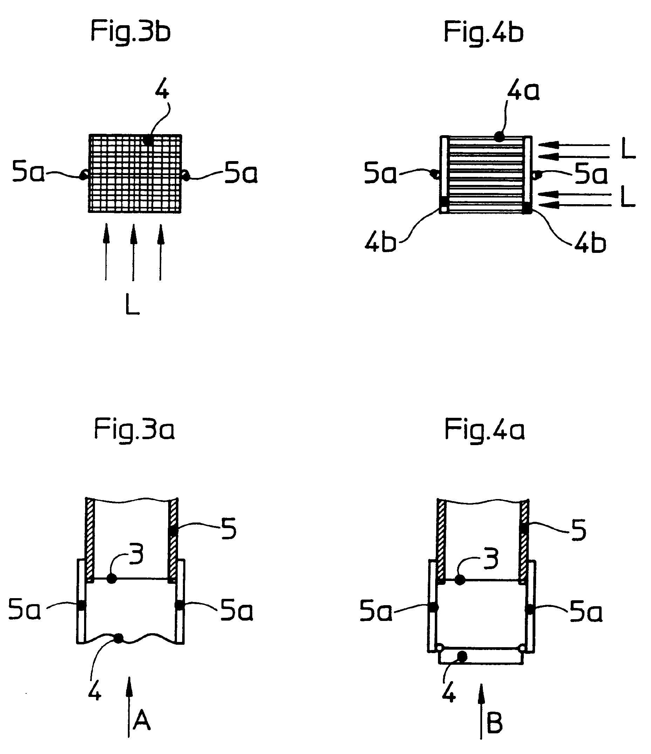

Figuren 3a und 3b zeigen ein abgewandeltes Auführungsbeispiel, bei welchem eine gewellte Anode 4 mittels zwei Haltern 5a am Glas-Rohr 5 befestigt ist. Figur 3b zeigt eine Draufsicht auf die Anode 4 aus der Richtung A in Figur 3a. Daraus ist ersichtlich, dass die Anode 4 rechteckig ausgebildet ist. Durch diese Konfiguration sowie die wellige Ausbildung wird die Oberfläche der Anode 4 vergrössert, was für bestimmte

Anwendungsfälle nützlich sein kann, um mit grösseren Strömen höhere Titrationsgeschwindigkeiten zu erreichen. Auch bei diesem Ausführungsbeispiel kann die Anode 4 mit ihrer Schmalseite so auf die Indikator-Elektrode 7 ausgerichtet werden, dass geringstmögliche Beeinflussung gewährleistet bleibt. Auch die Ueberströmung der Anode 4 mit Lösungsmittel L lässt sich beim Ausführungsbeispiel gemäss Figur 3a und 3b vorteilhaft lösen.

Figuren 4a und 4b zeigen ein weiter abgewandeltes Ausführungsbeispiel, bei welchem die Anode 4 eine Mehrzahl von Lamellen 4a aufweist, die zwischen Streben 4b befestigt sind, welche ihrerseits durch Halter 5a am Glas-Rohr 5 befestigt sind. Figur 4b zeigt dabei eine Draufsicht auf die Anode 4 gemäss Pfeil B in Figur 4a. Durch die Lamellen-Anordnung lässt sich einerseits die Oberfläche der Anode 4 weiter vergrössern und andererseits wird die Durchströmung mit Lösung L besonders gut erreicht.

Selbstverständlich kann es Anwendungsbeispiele geben, bei welchem z.B. zwei Kathoden 3 oder auch Teilanoden 4 zweckmässig sind, um bestimmte Reaktionen bei entsprechender Stromdichte ablaufen zu lassen. Auch können z.B. in einer Messzelle zwei Generator-Elektroden 2 angeordnet werden, ohne dass dadurch der Rahmen der Erfindung verlassen würde. Auch die Halterung der Anode 4 bzw. der Kathode 3 lässt auf andere als die dargestellte, bevorzugte Ausführungsform lösen. So können z.B. Anode 4 und Kathode 3 jeweils an separaten Trägern befestigt werden oder es können andere Querschnittsformeln als die des zylindrischen Glas-Rohrs 5 verwendet werden.

## Patentansprüche

1. Diaphragmalose Messzelle (1) für die coulometrische Karl Fischer Titration, bei welcher zwischen wenigstens einer Anode (4) und einer Kathode (3) einer Generator-Elektrode (2) ein Reagens in einer Lösung (10; L) erzeugt wird, wobei die Anode (4) ein Körper mit wenigstens einer grossflächigen, der Kathode zugewandten Oberfläche und einer Schmalseite ist, wobei die Kathode (3) eine wesentlich geringere wirksame Oberfläche aufweist und wobei in der Messzelle (1) im Abstand von der Anode (4) eine Indikator-Elektrode (7) vorgesehen ist, dadurch gekennzeichnet, dass die Anode (4) mit ihrer Schmalseite der Indikator-Elektrode (7) zugewandt ist.

2. Messzelle nach Anspruch 1, dadurch gekennzeichnet, dass die Anode (4) etwa horizontal, d.h. etwa parallel zur Lösungs-Oberfläche (10a) in der Messzelle (1) angeordnet ist.

3. Messzelle nach Anspruch 1 oder 2, dadurch gekennzeichnet, dass die Anode (4), bezogen auf die Oberfläche (10a) der Lösung (10) unter der Kathode (3) angeordnet ist.

4. Messzelle nach einem der vorangegangenen Ansprüche, dadurch gekennzeichnet, dass die Anode (4) ein scheibenformiger Körper ist.

5. Messzelle nach einem der vorangegangenen Ansprüche, dadurch gekennzeichnet, dass die Kathode (3) stabförmig ist.

6. Messzelle nach Anspruch 5, dadurch gekennzeichnet, dass die Kathode (3) aus einem Metalldraht besteht.

7. Messzelle nach einem der vorangegangenen Ansprüche, dadurch gekennzeichnet, dass die Anode (4) aus einem Metallgitter geformt ist.

8. Messzelle nach einem der vorangegangenen Ansprüche, dadurch gekennzeichnet, dass die Anode (4) an einem rohrförmigen Träger (Glas-Rohr 5) befestigt ist.

9. Messzelle nach Anspruch 8, dadurch gekennzeichnet, dass die Anode (4) an der unteren Stirnseite des Träger-Rohrs (5) befestigt ist, und dass in der Seitenwand des Träger-Rohrs (5) wenigstens zwei Oeffnungen (11) vorgesehen sind, um das in der Reaktionszone (6) zwischen Anode (4) und Kathode (3) entstehende Reagens in der Lösung (10) zirkulieren zu lassen.

10. Messzelle nach einem der vorangegangenen Ansprüche, dadurch gekennzeichnet, dass die Kathode (3) in einem Träger-Rohr (5) befestigt ist, und dass das Träger-Rohr im Bereich über der Kathode (3) geschlossen ist, um an der Kathode entstehende Gase in Richtung auf die Oberfläche (10a) der Lösung (10) und/oder aus der Messzelle (1) abzuleiten und dass das Träger-Rohr (5) dazu wenigstens eine über der Lösungs-Oberfläche (10a) liegende innere Oeffnung (12) und/oder eine Auslass-Oeffnung (9) aufweist.

11. Messzelle nach einem der vorangegangenen Ansprüche, dadurch gekennzeichnet, dass Kathode (3) und Anode (4) am gleichen Träger (5) befestigt sind.

12. Messzelle nach einem der vorangegangenen Ansprüche in etwa zylindrischer Bauform und mit einem etwa im Zentrum angeordneten Rührwerk zur Zirkulation des zwischen Anode (4) und Kathode (3) erzeugten Reagens, dadurch gekenn zeichnet, dass die Generator-Elektrode (2) mit Anode (4) und Kathode (3) in der Nähe der Messzellen-Wand und im Bereich der grössten Strömungsgeschwindigkeit der in der Messzelle (1) enthaltenen Lösung (10) angeordnet ist.

13. Messzelle nach Anspruch 10, dadurch gekennzeichnet, dass das Träger-Rohr (5) durch eine Oeffnung in der Wand der Messzelle (1) geführt ist, und dass zwischen dem Rohr-Raum über der Kathode (3) und der Auslass-Oeffnung (9) des Träger-Rohrs (5) eine Feuchtigkeitssperre (13) vorgesehen ist.

14. Diaphragmalose Messzelle für die coulometrische Karl Fischer Titration mit wenigstens einer Generator-Elektrode (2) mit Anode (4) und Kathode (3) zur Erzeugung eines Reagens in einer Lösung (10, L) und mit einer Indikator-Elektrode (7) mit wenigstens zwei Einzel-Elektroden (7a, 7b) zwischen denen ein Messfeld in der Lösung besteht, insbesondere nach einem der vorangegangenen Ansprüche, dadurch gekennzeichnet, dass das Messfeld zwischen den Einzel-Elektroden (7a, 7b) etwa senkrecht zu den Feldlinien zwischen Anode (4) und Kathode (3) der Generator-Elektrode (2) verläuft.

15. Verfahren zum Durchführen einer coulometrischen Karl Fischer-Titration mit einer Messzelle (1) die mit Lösung (10, L) gefüllt ist, dadurch gekennzeichnet, dass zur Erzeugung von Reagens in der Lösung ein elektrisches Generator-Feld erzeugt wird, dessen Feldlinien etwa senkrecht zum Potential-Feld zwischen zwei Indikator-Elektroden verläuft.

## Claims

1. Diaphragm-less measuring cell (1) for coulometric Karl Fischer-titration, in which a reagent is generated in a solution (10; L) between at least one anode (4) and one cathode (3) of a generator electrode (2), the anode (4) being a body with at least one large-area surface facing the cathode and with a narrow side, the cathode (3) having a substantially smaller active surface and an indicator electrode (7) being provided in the measuring cell (1) at a distance from the anode (4), characterised in that the narrow side of the anode (4) faces the indicator electrode (7).

2. Measuring cell according to claim 1, characterised in that the anode (4) is disposed approximately horizontally, i.e. approximately parallel to the solution surface (10a) in the measuring cell (1).

3. Measuring cell according to claim 1 or 2, characterised in that the anode (4) is disposed below the cathode (3) relative to the surface (10a) of the solution (10).

4. Measuring cell according to one of the preceding claims, characterised in that the anode (4) is a disc-shaped body.

5. Measuring cell according to one of the preceding claims, characterised in that the cathode (3) is rod-shaped.

6. Measuring cell according to claim 5, characterised in that the cathode (3) consists of a metal wire.

7. Measuring cell according to one of the preceding claims, characterised in that the anode (4) is formed of a metal mesh.

8. Measuring cell according to one of the preceding claims, characterised in that the anode (4) is fixed to a tubular support (glass tube 5).

9. Measuring cell according to claim 8, characterised in that the anode (4) is fixed at the lower end face of the support tube (5) and in that at least two apertures (11) are provided in the side wall of the support tube (5) in order to allow the reagent being generated in the reaction zone (6) between the anode (4) and the cathode (3) to circulate in the solution (10).

10. Measuring cell according to one of the preceding claims, characterised in that the cathode (3) is fixed in a support tube (5) and in that the support tube is sealed in the region over the cathode (3) in order to discharge gases arising at the cathode in the direction of the surface (10a) of the solution (10) and/or out of the measuring cell (1), and in that the support tube (5) has for this purpose at least one inner aperture (12) lying above the solution surface (10a) and/or an outlet aperture (9).

11. Measuring cell according to one of the preceding claims, characterised in that the cathode (3) and anode (4) are fixed to the same support (5).

12. Measuring cell according to one of the preceding claims and having an approximately cylindrical form and a stirrer disposed approximately in the centre in order to circulate the reagent being generated between the anode (4) and the cathode (3), characterised in that the generator electrode (2) comprising the anode (4) and cathode (3) is disposed close to the measuring cell wall and in the region of the maximum flow speed of the solution (10) contained in the measuring cell (1).

13. Measuring cell according to claim 10, characterised in that the support tube (5) is guided through an aperture in the wall of the measuring cell (1) and in that a moisture lock (13) is provided between the tube cavity over the cathode (3) and the outlet aperture (9) of the support tube (5).

14. Diaphragm-less measuring cell for coulometric Karl Fischer-titration, comprising at least one generator electrode (2) comprising an anode (4) and a cathode (3) for generating a reagent in a solution (10; L), and comprising an indicator electrode (7) having at least two individual electrodes (7a, 7b), between which a measuring field exists in the solution, in particular according to one of the preceding claims, characterised in that the measuring field extends between the individual electrodes (7a, 7b) approximately perpendicular to the field lines between the anode (4) and cathode (3) of the generator electrode (2).

15. Method of carrying out coulometric Karl Fischer-titration with a measuring cell (1) filled with solution (10, L), characterised in that in order to generate a reagent in the solution an electric generator field is generated, whose field lines extend approximately perpendicular to the potential field between two indicator electrodes.

## Revendications

1. Cellule de mesure sans diaphragme (1) pour le titrage coulométrique Karl Fischer, avec laquelle un réactif est généré dans une solution (10 ; L) entre au moins une anode (4) et une cathode (3) d'une électrode génératrice (2), étant précisé que l'anode (4) est un corps comportant au moins une grande surface tournée vers la cathode et un côté étroit, que la cathode (3) comporte une surface active sensiblement plus petite, et qu'il est prévu dans la cellule de mesure (1), à une certaine distance de l'anode (4), une électrode indicatrice (7), caractérisée en ce que l'anode (4) est tournée, avec son côté étroit, vers l'électrode indicatrice (7).

2. Cellule de mesure selon la revendication 1, caractérisée en ce que l'anode (4) est disposée dans la cellule de mesure (1) sensiblement à l'horizontale, c'est-à-dire sensiblement parallèlement à la surface (10a) de la solution.

3. Cellule de mesure selon la revendication 1 ou 2, caractérisée en ce que l'anode (4) est disposée sous la cathode (3), par rapport à la surface (10a) de la solution (10).

4. Cellule de mesure selon l'une des revendications précédentes, caractérisée en ce que l'anode (4) est un corps en forme de plaque.

5. Cellule de mesure selon l'une des revendications précédentes, caractérisée en ce que la cathode (3) est en forme de barre.

6. Cellule de mesure selon la revendication 5, caractérisée en ce que la cathode (3) se compose d'un fil métallique.

7. Cellule de mesure selon l'une des revendications précédentes, caractérisée en ce que l'anode (4) est formée à partir d'une grille métallique.

8. Cellule de mesure selon l'une des revendications précédentes, caractérisée en ce que l'anode (4) est fixée à un support tubulaire (tube en verre 5).

9. Cellule de mesure selon la revendication 8, caractérisée en ce que l'anode (4) est fixée au côté frontal inférieur du tube support (5), et en ce qu'il est prévu, dans la paroi latérale du tube support (5), au moins deux ouvertures (11) afin de faire circuler dans la solution (10) le réactif qui se forme dans la zone de réaction (6) située entre l'anode (4) et la cathode (3).

10. Cellule de mesure selon l'une des revendications précédentes, caractérisée en ce que la cathode (3) est fixée dans un tube support (5), et en ce que le tube support est fermé dans la zone située au-dessus de la cathode (3), afin d'évacuer en direction de la surface (10a) de la solution (10) et/ou hors de la cellule de mesure (1) les gaz qui se forment au niveau de la cathode, et en ce que le tube support (5) comporte à cet effet au moins une ouverture intérieure (12) située au-dessus de la surface (10a) de la solution et/ou une ouverture d'évacuation (9).

11. Cellule de mesure selon l'une des revendications précédentes, caractérisée en ce que la cathode (3) et l'anode (4) sont fixées au même support (5).

12. Cellule de mesure selon l'une des revendications précédentes, présentant une forme sensiblement cylindrique et comportant un agitateur disposé sensiblement au centre pour la circulation du réactif généré entre l'anode (4) et la cathode (3), caractérisée en ce que l'électrode génératrice (2), avec l'anode (4) et la cathode (3), est disposée près de la paroi de la cellule de mesure et dans la zone de la vitesse de courant maximale de la solution (10) contenue dans la cellule de mesure (1).

13. Cellule de mesure selon la revendication 10, caractérisée en ce que le tube support (5) traverse une ouverture ménagée dans la paroi de la cellule de mesure (1), et en ce qu'une barrière d'humidité (13) est prévue entre l'espace tubulaire situé au-dessus de la cathode (3), et l'ouverture d'évacuation (9) du tube support (5).

14. Cellule de mesure sans diaphragme pour le titrage coulométrique Karl Fischer, comportant au moins une électrode génératrice (2) formée d'une anode (4) et d'une cathode (3), pour la production d'un réactif dans une solution (10, L), et une électrode indicatrice (7) formée d'au moins deux électrodes individuelles (7a, 7b) entre lesquelles existe un champ de mesure dans la solution, en particulier selon l'une des revendications précédentes, caractérisée en ce que le champ de mesure entre les électrodes individuelles (7a, 7b) est sensiblement perpendiculaire aux lignes de champ entre l'anode (4) et la cathode (3) de l'électrode génératrice (2).

15. Procédé pour réaliser un titrage coulométrique Karl Fischer à l'aide d'une cellule de mesure (1) qui est remplie d'une solution (10, L), caractérisé en ce que, pour produire un réactif dans la solution, on génère un champ générateur électrique dont les lignes de champ sont sensiblement perpendiculaires au champ de potentiel entre deux électrodes indicatrices.
